# EUROPÄISCHE PATENTANMELDUNG

(11) **EP 1 985 167 A1**
(43) Veröffentlichungstag der Anmeldung: **29.10.2008**
(21) Anmeldenummer: 08007740.7
(22) Anmeldetag: 22.04.2008
(51) Int. Cl.: A01B 69/00, A01D 42/00, A01G 3/04

(54) **Trag- und/oder Führungsvorrichtung sowie System zur Bearbeitung von Pflanzen, insbesondere zum Zuschneiden von Pflanzen**

(30) Priorität: 26.04.2007 DE 202007006110 U; 15.05.2007 DE 202007007057 U; 20.07.2007 DE 202007010138 U; 17.08.2007 DE 202007011539 U
(71) Anmelder: Baumann, Georg, 94081 Fürstenzell (DE); Haslauer, Hermann, 4752 Riedau (AT)
(72) Erfinder: Baumann, Georg, 94081 Fürstenzell (DE); Haslauer, Hermann, 4752 Riedau (AT)
(74) Vertreter: Graf, Helmut

(57) **Zusammenfassung**

Trag- und/oder Führungsvorrichtung eines Arbeitsgerätes zur Bearbeitung von Pflanzen, insbesondere zum Zuschneiden von Pflanzen, mit einem verfahrbaren Rahmen mit wenigstens einem beispielsweise motorisch angetiebenen Werkzeug sowie mit am Rahmen vorgesehene Führungselemente für ein Zusammenwirken mit wenigstens einem geländeseitigen Führungsabschnitt.

## Beschreibung

Die Erfindung bezieht sich auf eine Trag- und/oder Führungsvorrichtung gemäß Oberbegriff Patentanspruch 1 sowie auf ein System zur Bearbeitung von Pflanzen, insbesondere zum Zuschneiden von Pflanzen gemäß Oberbegriff Patentanspruch 13.

Bekannt sind Begrenzungen, insbesondere auch Rasenkantenbegrenzungen die aus Metall gefertigt sind und mit einem schienenartigen Abschnitt geringfügig über das Niveau des Bodens bzw. Untergrundes vorstehen. Bekannt ist insbesondere auch eine Rasenkantenbegrenzung bestehend aus mehreren aneinander anschließenden und in den Boden eingebrachten Platten aus korrosionsbeständigen Stahl (EP 02 000 018.8).

Aufgabe der Erfindung ist es, eine Trag- und/oder Führungsvorrichtung aufzuzeigen, die für ein Arbeitsgerät zur vereinfachten Bearbeitung von Pflanzen, insbesondere zum Zuschneiden von Pflanzen geeignet ist und/oder teil eines solchen Arbeitsgerätes bildet. Aufgabe der Erfindung ist es weiterhin, ein System aufzuzeigen, welches unter Ausnutzung von Begrenzungen, auch unter Ausnutzung bereits bestehender Begrenzungen, beispielsweise Ausnutzung von Rasenkanten- und/oder Wegbegrenzungen eine vereinfachte Behandlung von entlang einer solchen Begrenzung wachsenden Pflanzen ermöglicht.

Zur Lösung dieser Aufgabe ist eine Trag- und/oder Führungsvorrichtung entsprechend dem Patentanspruch 1 ausgebildet. Ein System zur Bearbeitung von Pflanzen, insbesondere zum Zuschneiden von Pflanzen ist Gegenstand des Patentanspruchs 13.

Bei dem erfindungsgemäßen System ist der entlang der jeweiligen Begrenzung geführte verfahrbare Rahmen beispielsweise Bestandteil eines Arbeitsgerätes, beispielsweise der Rahmen eines Rasenmähers, oder aber der verfahrbare Rahmen ist ein Trag- und/oder Führungsrahmen, an dem das Arbeitsgerät, beispielsweise eine Heckenschere vorzugsweise einstellbar befestigt ist.

In Weiterbildung der Erfindung sind die erfindungsgemäße Trag- und/oder Führungsvorrichtung und/oder das erfindungsgemäße system beispielsweise auch so ausgebildet,
dass der wenigstens eine Führungsabschnitt von einem Abschnitt einer in einen Untergrund einbringbaren Begrenzung, beispielsweise einer Weg- oder Rasenkantenbegrenzung und/oder von einem im Abstand über einem Untergrund verlaufenden Führungselement, beispielsweise Führungsschiene oder Führungsseil gebildet ist,
und/oder
dass der Rahmen Bestandteil eines Arbeitsgerätes und/oder dass am Rahmen wenigstens ein Halter oder Lagerbock zur vorzugsweise einstellbaren Befestigung eines Arbeitsgerätes vorgesehen ist,
und/oder
dass die Begrenzung aus Metall, beispielsweise aus mehreren aneinander anschließenden Platten aus Metall besteht,
und/oder
dass die Führung von wenigstens einer drehbar gelagerten Führungsrolle gebildet ist,
und/oder
dass die Führung von wenigstens zwei drehbar gelagerten Führungsrollen gebildet ist,
u nd/oder
dass der Rahmen ein vertikales oder im Wesentlichen vertikales Rahmenelement aufweist, an dem der Halter- oder Lagerbock für das Arbeitsgerät vorgesehen ist,
und/oder
dass der Rahmen ein einen seitlichen Ausleger bildendes Rahmenelement aufweist,
und/oder
dass der Halter bzw. Lagerbock ein am Rahmen verschiebbarer, vorzugsweise gewichtsentlastet verschiebbarer Schlitten ist,
und/oder
dass das Arbeitsgerät schwenkbar bzw. einstellbar am Rahmen oder am Schlitten vorgesehen ist.,
und/oder
dass das Arbeitsgerät eine Heckenschere ist,
und/oder
dass das Arbeitsgerät ein Rasenmäher ist,
und/oder
dass wenigstens ein Sicherungselement zum Sichern des Führungseingriffs der Führungselemente an dem Führungsabschnitt vorgesehen ist,
und/oder
dass Antriebe, beispielsweise elektrische Antriebe zum Bewegen des Rahmens und/oder zur Einstellung der Lage und/oder Orientierung des Arbeitsgerätes vorgesehen sind,
und/oder
dass Mittel zur Steuerung der Antriebe des Systems nach einem vorgegebenen Programm vorgesehen sind, vorzugsweise unter Berücksichtigung des Steuersignals einer die Position des Systems ermittelnden Steuereinrichtung,
wobei die vorgenannten Merkmale jeweils einzeln oder in beliebiger Kombination verwendet sein können.

Weiterbildungen, Vorteile und Anwendungsmöglichkeiten der Erfindung ergeben sich aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1 - 3: eine Vorrichtung gemäß der Erfindung in Seitenansicht (Figur 1), in Frontansicht (Figur 2) sowie in Draufsicht (Figur 3);
- Fig. 4: eine in den Boden eingebrachte Rasen- bzw. Wegbegrenzung, bestehend aus mehreren aneinander anschließenden, profilierten Platten aus korrosionsbeständigem Stahl;
- Fig. 5: die Begrenzung zusammen mit einer Führungsrolle;
- Fig. 6: in sehr vereinfachter Darstellung eine Ansicht ähnlich Figur 2 bei einer weiteren Ausführungsform der Erfindung;
- Fig. 7: eine Darstellung ähnlich Figur 5 bei einer weiteren Ausführungsform;
- Fig. 8: in vergrößerter Teildarstellung einen Schnitt durch den Ausleger bei einer weiteren Ausführungsform der erfindungsgemäßen Vorrichtung.

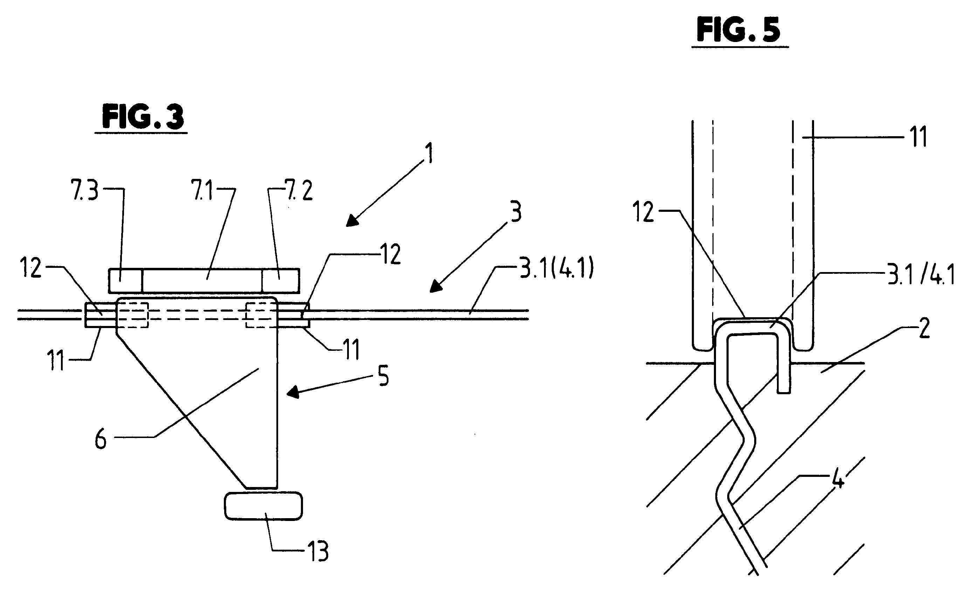

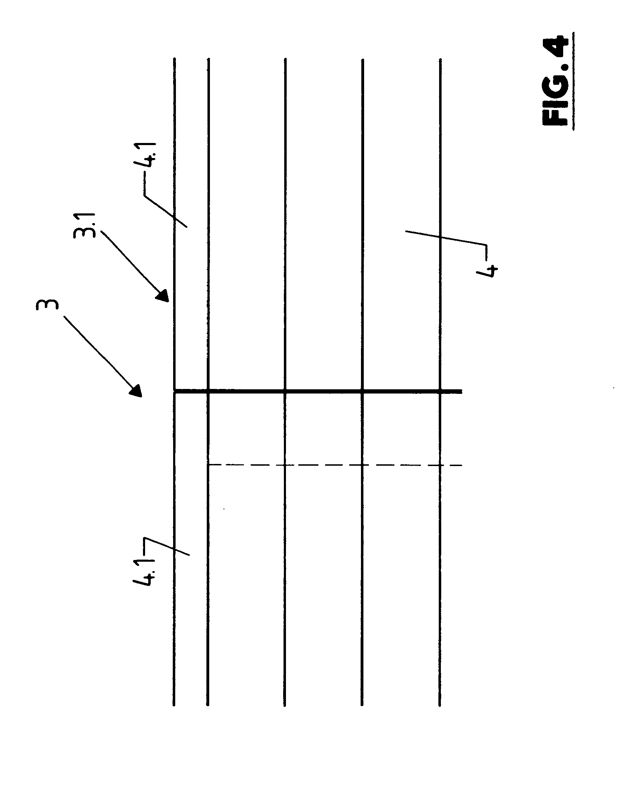

Die in den Figuren allgemein mit 1 bezeichnete Trag- und/oder Führungsvorrichtung ist für die Verwendung in Verbindung mit einer in den Boden 2 eingebrachten Begrenzung 3, beispielsweise Rasenkanten und/oder Wegbegrenzung bestimmt, die einen entlang der Begrenzung 3 verlaufenden und über das Niveau des Bodens 2 vorstehenden schienenartigen Abschnitt 3.1 bildet. Bei der dargestellten Ausführungsform besteht die Begrenzung 3 aus mehreren, in den Boden 2 eingebrachten, beispielsweise eingetriebenen und aneinander anschließenden Platten 4, die an ihrem oberen Plattenrand 4.1 U-förmig umgebogen und ansonsten so profiliert sind, dass die Platten 4 eine mit ihren Tälern und Erhebungen parallel zu dem oberen Plattenrand 4.1 verlaufenden Wellung aufweisen, wie dies insbesondere auch in den Figuren 4 und 5 dargestellt ist.

Die Platten 4 sind einander überlappend und an ihrem oberen U-förmig umgebogenen Plattenrand 4.1 aneinander anschließend so in den Boden 2 eingebracht, dass die Plattenränder 4.1 über das Niveau des Bodens 2 vorstehen, mit der offenen Seite des U-Profils dem Boden 2 zugewandt den schienenartigen Abschnitt 3.1 der Begrenzung 3 bilden.

Die Vorrichtung 1 besteht im Wesentlichen aus einem aus Metall (z.B. Stahl) oder Metall- oder Stahlprofilen gefertigten Rahmen 5 mit einem unteren Ausleger oder Rahmenelement 6, welches bei der dargestellten Ausführungsform in Draufsicht eine etwa dreieckförmige Formgebung aufweist und beispielsweise von einer Platte und/oder von mehreren Rahmenteilen gebildet ist. Das Rahmenelement 6 ist gelenkig mit einem weiteren, ebenfalls dreieckförmigen Rahmenelement 7 verbunden, und zwar über ein Gelenk 8.

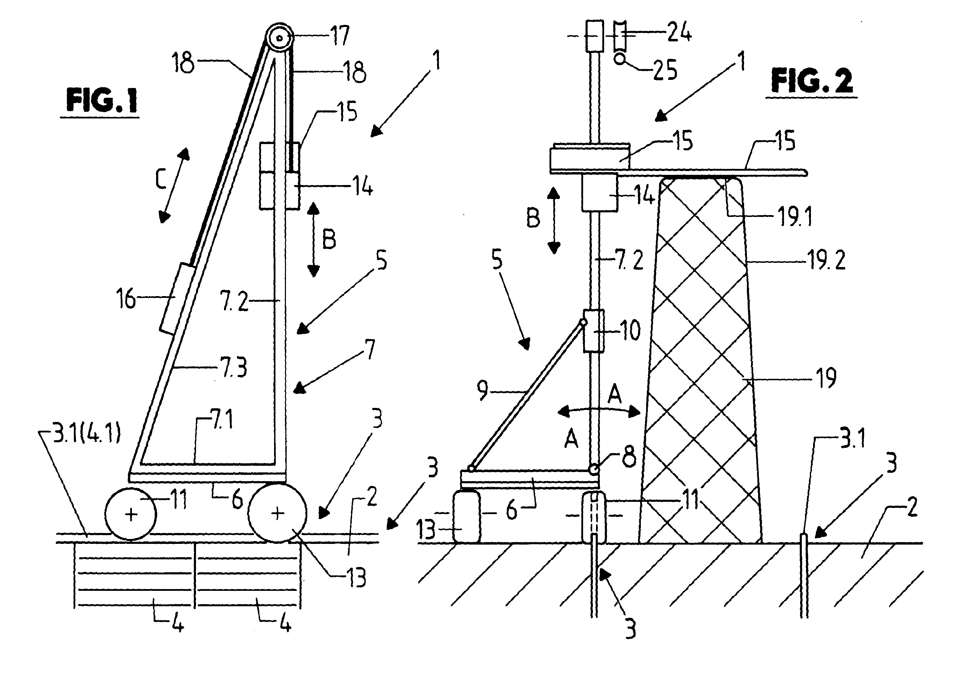

Das Rahmenelement 7 besteht bei der dargestellten Ausführung im Wesentlichen aus drei Rahmenteilen 7.1 - 7.3, die zu dem bei der dargestellten Ausführungsform ein rechtwinkliges Dreieck bildenden Rahmenelement 7 miteinander verbunden sind. Das Rahmenteil 7.1 bildet dabei die untere, im Verwendungsfall der Vorrichtung 1 parallel zum Abschnitt 3.1 angeordnete horizontale oder im Wesentlichen horizontale Basis. Mit dem Rahmenteil 7.1 ist auch das Rahmenelement 7 über das Gelenk 8 um eine Achse parallel zur Längserstreckung des Rahmenteils 7.1 am Ausleger bzw. Rahmenelement 6 angelenkt, wie dies in der Figur 2 mit dem Doppelpfeil A angedeutet ist. Das Rahmenteil 7.2, welches im Verwendungsfall der Vorrichtung 1 senkrecht zur Längserstreckung des Abschnittes 3.1 und dabei in vertikaler Richtung oder im Wesentlichen vertikaler Richtung orientiert ist, ist mit seinem in den Figuren 1 und 2 unteren Ende fest mit einem Ende des Rahmenteils 7.1 verbunden und mit seiner Längserstreckung senkrecht zur Längserstreckung des Rahmenteils 7.1 orientiert. Das in den Figuren 1 und 2 obere Ende des Rahmenteils 7.1 ist über das Rahmenteil 7.3 mit dem anderen Ende des Rahmenteils 7.1 verbunden. Die beiden Rahmenteile 7.2 und 7.3 sind jeweils als Führungsschienen ausgebildet oder mit wenigstens einer Führungsschiene versehen.

Zur Stabilisierung der Lage des Rahmenelementes 7 bzw. zur Blockierung der Schwenkbewegung um das Gelenk 8 ist eine Strebe 9 vorgesehen, die mit einem Ende im Bereich der dem Gelenk 8 entfernt liegenden äußeren Ecke des Rahmenelementes 6 um eine Achse parallel zur Achse des Gelenks 8 angelenkt ist und mit dem anderen Ende einstellbar mit dem Rahmenteil 7.2 verbunden ist. Bei der dargestellten Ausführungsform ist die Strebe 9 mit ihrem anderen Ende 8 an einem Führungsstück 10 wiederum um eine Achse parallel zur Achse des Gelenks 8 angelenkt. Das Führungsstück 10 ist in Längsrichtung des Rahmenteils 7.2 an diesem verschiebbar geführt (Doppelpfeil B), sodass unter Verschieben des Führungsstücks 10 ein Schwenken des Rahmenelementes 7 relativ zum Ausleger bzw. Rahmenelement 6 sowie auch ein Zusammenklappen der Vorrichtung 1 für eine raumsparende Lagerung möglich sind. Durch eine Klemmvorrichtung ist das Führungsstück 10 am Rahmenteil 7.2 gegen Verschieben blockierbar.

An dem Rahmenteil 6 sind in Richtung der Längserstreckung des Rahmenteils 7.1 gegeneinander versetzt und im Bereich der Eckpunkte des Rahmenelementes 6 zwei Führungsrollen 11 frei drehbar gelagert, und zwar um Achsen, die senkrecht zur Achse des Gelenks 8 und im Verwendungsfall der Vorrichtung horizontal oder im Wesentlichen horizontal orientiert sind. Die Führungsrollen 11 sind an ihrem Umfang mit einer Nut 12 versehen, mit der die Führungsrollen 11 passend auf den Abschnitt 3.1 der Begrenzung 3 aufgesetzt werden können, sodass die Vorrichtung 1 an diesem Abschnitt 3.1 verschiebbar geführt ist. An der dem Gelenk 8 entfernt liegenden Seite, d.h. im Bereich des dortigen Eckpunktes des Rahmenelementes 6 ist an diesem um eine Achse parallel zu den Achsen der Führungsrollen 11 eine Laufrolle 13 frei drehbar gelagert, mit der die Vorrichtung 1 im Verwendungsfall auf dem Boden 2 bzw. Untergrund seitlich von der Begrenzung 3 aufsteht. Die Laufrolle 13, die beispielsweise ein Rad mit Gummi- oder Druckluftbereifung ist, besitzt z.B. einen Durchmesser von 18 cm. Der Durchmesser der Führungsrollen 11 ist gleich oder aber geringfügig kleiner als der Durchmesser der Laufrolle 13.

Am Rahmenteil 7.2 ist ein Schlitten 14 verschiebbar geführt (Doppelpfeil B), der als Träger oder Lagerbock mit Einstell- und/oder Schwenkeinrichtung für ein Arbeitsgerät dient, welches bei der dargestellten Ausführungsform eine Heckenschere 15 mit einem motorisch, z.B. mit einem Elektromotor oder einem Verbrennungsmotor angetriebenen Schneidwerk ist. Diese befindet sich dann an der der Laufrolle 13 abgewandten Seite des Rahmenelementes 7 bzw. des Rahmenteils 7.2 und ist einstellbar am Schlitten 14 vorgesehen. Mit der Schwenkeinrichtung kann die Heckenschere 15 beliebig gedreht und in der jeweiligen Einstellung fixiert werden kann. Vorzugsweise ist die Schwenkeinrichtung auch mit wenigstens einer Winkelanzeige versehen, mit der eine exakte Einstellung möglich ist. Um ein kraftloses Heben und Senken des Schlittens 14 zu gewährleisten, ist für den Schlitten 14 ein Gewichts- oder Massenausgleich vorgesehen, der bei der dargestellten Ausführungsform von einem am Rahmenteil 7.3 axial verschiebbaren (Doppelpfeil C) Massengewicht 16 und von einem über eine Umlenkrolle 17 am oberen Ende des Rahmenteils 7.2 geführten Seil 18 gebildet ist, welches den Schlitten 14 mit dem Massengewicht 16 verbindet.

Durch entsprechende Positionierung des Schlittens 14 sowie durch entsprechende Orientierung der Heckenschere 15 über die Schwenkeinrichtung ist ein Zuschneiden einer Hecke 19, die sich entlang der Begrenzung 3 erstreckt, durch Bewegen der Vorrichtung 1 entlang dieser Begrenzung möglich, und zwar sowohl an der Oberseite, als auch an Seitenflächen, jeweils unter beliebigem Schnittwinkel.

Ist ein Zuschneiden der Hecke 19 an beiden Seiten erforderlich, so ist beidseitig von der Hecke 19 jeweils eine, sich entlang der Hecke 19 erstreckende Begrenzung 3 vorgesehen.

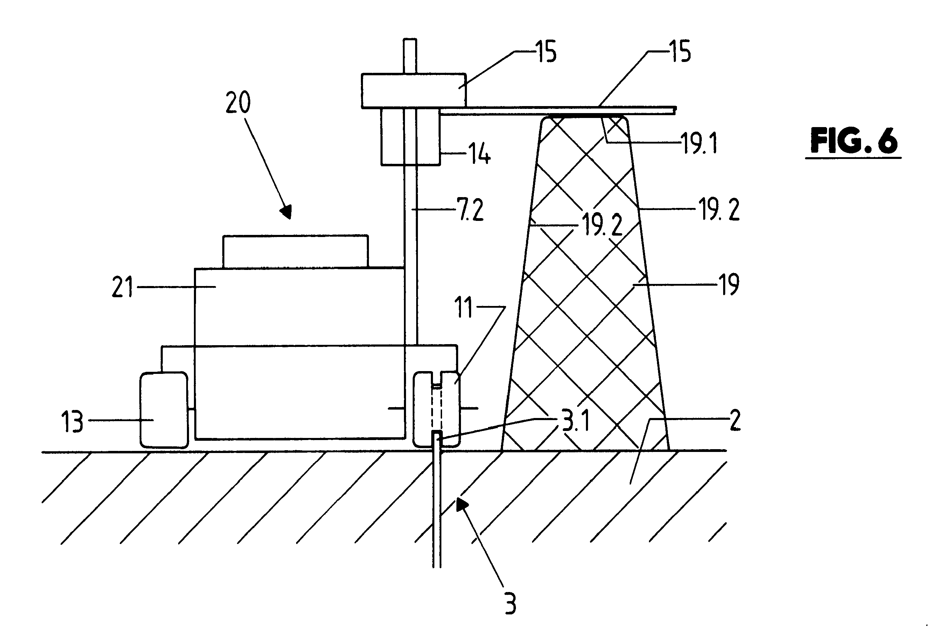

Die Figur 6 zeigt in einer Darstellung ähnlich Figur 2 als weitere Ausführungsform der Erfindung eine Vorrichtung 1a, die sich von der Vorrichtung 1 dadurch unterscheidet, dass der Vorrichtungsrahmen von dem Rahmen bzw. Gehäuse eines Arbeitsgerätes selbst, nämlich bei der dargestellten Ausführungsform von dem Gehäuse eines Rasenmähers 20 gebildet ist, der mit Führungsrollen 11 auf dem schienenartigen Abschnitt 3.1 der Begrenzung 3 entlang der Hecke 19 beweglich. An dem Gehäuse des Rasenmähers 20 ist ein dem Rahmenelement 7 entsprechendes Rahmenelement 7a befestigt, welches u.a. mit dem Rahmenteil 7a.2 über die Oberseite des Rasenmähers vorsteht. An diesem Rahmenteil ist wiederum der Schlitten 14 der Schwenkeinrichtung und mit dem Halter für eine Heckenschere 15 versehen.

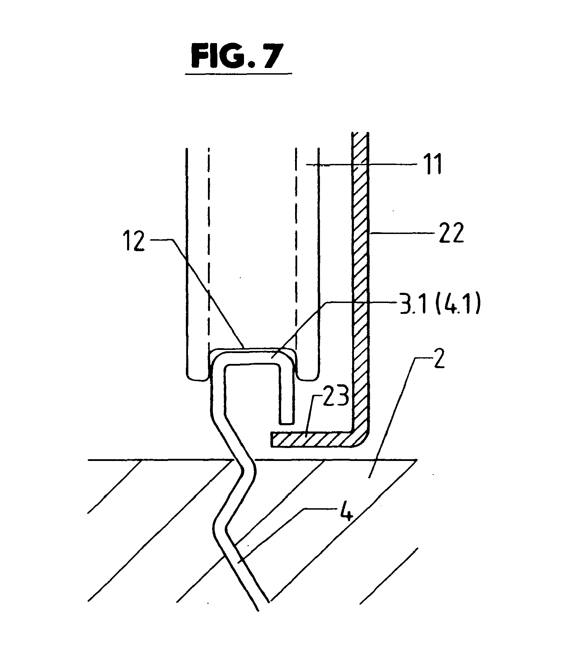

Die Figur 7 zeigt nochmals in vereinfachter Darstellung eine, auf der Rasen- oder Wegbegrenzung 3 bzw. auf dem Abschnitt 3.1 geführte Führungsrollen. An dem Rahmen des Arbeitsgerätes, beispielsweise an dem Rahmen 5 ist für jede auf dem Abschnitt 3.1 geführte Führungsrolle 11 ein Sicherungsbügel 22 befestigt, der mit einem hackenförmig abgewinkelten Ende 23 die Begrenzung 3 an dem U-förmig umgebogenen Abschnitt 3.1 hintergreift, sodass hierdurch die betreffende Führungsrolle 11 gegen ein Heruntergleiten von dem Abschnitt 3.1 gesichert ist.

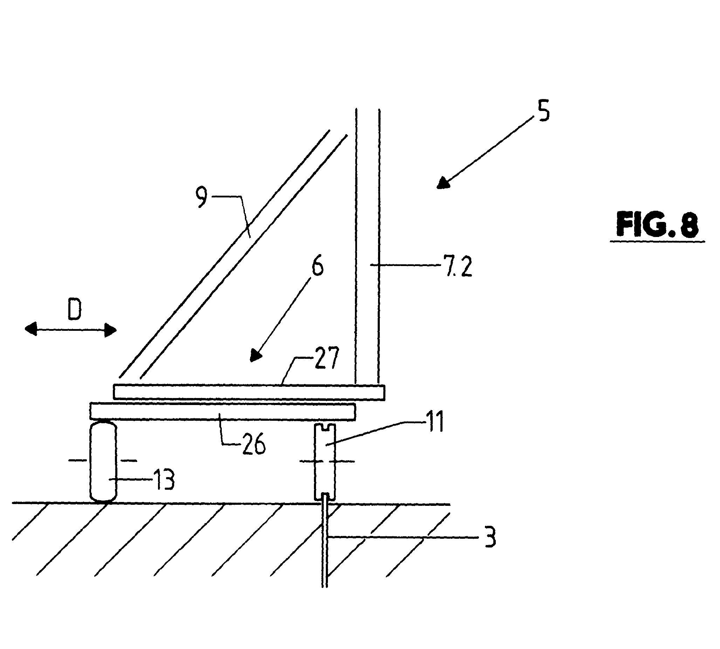

Die Figur 8 zeigt einen Teilschnitt durch den Vorrichtungsrahmen 5 im Bereich des unteren Rahmenelementes bzw. Auslegers 6. Der Ausleger besteht bei dieser Ausführungsform aus zwei beispielsweise jeweils als Platten ausgebildeten Rahmenteilen 26 und 27, von denen das untere Rahmenteil 26 die Rollen 11 und 13 aufweist und am oberen Rahmenteil 27 das Rahmenelement 7 befestigt ist. Das Rahmenteil 27 ist relativ zum Rahmenteil 26 in Richtung der Achsen der Rollen 11 und 13 einstellbar, wie dies in der Figur 8 mit dem Doppelpfeil D angedeutet ist. Mit dieser Einstellung kann bei vorgegebener Lager der Begrenzung 3 u.a. der Abstand der Schnittebene der Heckenseitenfläche 19.2 von der Begrenzung 3 eingestellt werden.

Die Erfindung wurde voranstehend an Ausführungsbeispielen beschrieben. Es versteht sich, dass Änderungen sowie Abwandlungen möglich sind, ohne das dadurch der der Erfindung zugrunde liegende Erfindungsgedanke verlassen wird.

So wurde vorstehend davon ausgegangen, dass der Rahmen 5 ein Trag- oder Führungsrahmen ist, an welchem das motorisch angetriebene Arbeitsgerät befestigt ist, und zwar vorzugsweise abnehmbar und einstellbar. Es sind aber auch Ausführungen denkbar, bei denen der Rahmen Teil des motorisch angetriebenen Arbeitsgerätes, beispielsweise der Rahmen eines Rasenmähers ist.

Weiterhin wurde vorstehend davon ausgegangen, dass lediglich zwei Führungsrollen 11 und eine Laufrolle 13 vorgesehen sind. Die Anzahl dieser Rollen kann auch hiervon abweichen. Insbesondere ist es auch möglich, jeweils zwei Führungsrollen an einem Laufschuh vorzusehen, der dann gelenkig mit dem Rahmen verbunden ist, um so die Kurvengängigkeit der von den Führungsrollen 11 gebildeten Führung zu verbessern.

Vorstehend wurde davon ausgegangen, dass das motorisch angetriebene Arbeitsgerät eine Heckenschere oder eine Heckenschere an einem Rasenmäher ist. Auch andere Arbeitsgeräte sind denkbar. So ist es insbesondere auch möglich, dass das Arbeitsgerät insgesamt ausschließlich ein motorisch angetriebener Rasenmäher ist, der mit Führungsrollen an dem schienenartigen Abschnitt 3.1 der jeweiligen Begrenzung 3 geführt ist.

Weiterhin besteht auch die Möglichkeit, dass System bzw. das jeweilige Arbeitsgerät so auszubilden, dass in einem Arbeitsgang an mehreren Seiten einer Hecke 19 zeitgleich ein Schneiden dieser Hecke erfolgt und/oder durch eine entsprechende Ausbildung des Werkzeugträgers und/oder eines entsprechenden Rahmenelementes ein Beschneiden der Hecke 19 an der der jeweiligen Begrenzung 3 abgewandten Seite möglich ist, sodass nur an einer Seite der Hecke 19 eine von einer dortigen Begrenzung 3 gebildete schienenartige Führung notwendig ist.

Weiterhin kann das erfindungsgemäße System auch so ausgeführt sein, dass der verfahrbare Rahmen lediglich an seinem unteren Ende mit wenigstens einem Führungselement, beispielsweise mit wenigstens einer Führungsrolle 11, bevorzugt aber mit wenigstens zwei Führungsrollen 11 an den schienenartigen Führungsabschnitt 3.1 der Begrenzung 3 geführt ist und am oberen Ende mittels einer Führungsrolle 24 an einem sich entlang des mit dem System zu pflegenden Bereichs, beispielsweise entlang der Hecke 19, erstreckenden Seils 25 geführt und gehalten ist.

Weiterhin besteht auch die Möglichkeit, den verfahrbaren Rahmen und/oder das Arbeitsgerät fernzusteuern oder durch eine Zeitsteuerung anzusteuern, sodass die Arbeiten mit diesem Gerät automatisch durchgeführt werden.

Weiterhin ist es möglich, anstelle des Gegengewichtes 16 auch andere Mittel für einen Gewichtsausgleich des Schlittens 14 mit dem Arbeitsgerät, beispielsweise der Heckenschere 15 vorzusehen. Insbesondere ist es auch möglich, ein dem Gegengewicht 16 entsprechendes Gegengewicht in einem beispielsweise als Rohprofil ausgebildeten Rahmenteil, z.B. in dem vertikalen Rahmenteil 7.2 unterzubringen.

Vorstehend wurde weiterhin davon ausgegangen, dass für die Erstellung der Neigung des Rahmenelementes 7 am Rahmenteil 7.2 ein Gleitstück 10 verschiebbar geführt ist. Grundsätzlich besteht auch die Möglichkeit, bei direkt am Rahmenelement 7 angelengter Strebe 9 diese für eine Verstellung zweiteilig teleskopartig auszubilden und dann die Verstellung entweder über einen Klemmmechanismus kontinuierlich oder aber über Lochreihen schrittweise auszubilden. Weiterhin besteht die Möglichkeit für die Bewegung der Vorrichtung 1 bzw. 1a entlang der Begrenzung 3 sowie auch für die Einstellung des jeweiligen Arbeitsgerätes motorische Antriebe vorzusehen, beispielsweise elektronmotorische Antriebe, die dann beispielsweise auch programmgesteuert werden, z.B. unter Berücksichtigung eines des jeweiligen Standort der Vorrichtung definierten den Messwertes (z.B. GPS-Steuerung), sodass in einem automatischen Betrieb der Vorrichtung bestimmte, vorprogrammierte Formen beim Schneiden z.B. einer Hecke 19 erreicht werden können. Bei einem elektromotorischen Antrieb weist die Vorrichtung dann bevorzugt auch eine Versorgungseinheit auf, die über Solarzellen betrieben wird.

### Bezugszeichenliste

- 1: Vorrichtung
- 2: Boden oder Untergrund
- 3: Begrenzung
- 3.1: schienenartiger Abschnitt der Begrenzung 3
- 4: Platte
- 4.1: Plattenoberkante
- 5: Vorrichtungsrahmen
- 6: Rahmenelement oder Ausleger
- 7, 7a: Rahmenelement
- 7.1 - 7.3: Rahmenteil
- 7a.2: Rahmenteil
- 8: Gelenk
- 9: Strebe
- 10: Gleitstück
- 11: Führungsrolle
- 12: Nut
- 13: Laufrolle
- 14: Schlitten mit Schwenkeinrichtung und Halter
- 15: Heckenschere
- 16: Gegengewicht
- 17: Umlenkrolle
- 18: Seil
- 19: Hecke
- 19.1: Heckenoberseite
- 19.2: Heckenseitenfläche
- 20: Rasenmäher
- 21: Gehäuse oder Rahmen des Rasenmähers 20
- 22: Halte- oder Sicherungsbügel
- 23: abgewinkeltes Ende
- 24: Seilrolle
- 25: Seil oder Führungsabschnitt
- 26, 27: Rahmenteil

- A: Schwenkbewegung
- B, C: Längsbewegung
- D: Verstellung

## Patentansprüche

1. Trag- und/oder Führungsvorrichtung eines Arbeitsgerätes (15) zur Bearbeitung von Pflanzen, insbesondere zum Zuschneiden von Pflanzen,
**gekennzeichnet durch**
einen verfahrbaren Rahmen (5, 21) mit wenigstens einem Werkzeug (15, 20), beispielsweise mit wenigstens einem motorisch angetiebenen Werkzeug, sowie **durch** am Rahmen (5, 21) vorgesehene Führungselemente (11, 24) für ein Zusammenwirken mit wenigstens einem geländeseitigen Führungsabschnitt (3.1, 25).

2. Trag- und/oder Führungsvorrichtung nach Anspruch 1, **dadurch gekennzeichnet, dass** der wenigstens eine Führungsabschnitt von einem Abschnitt (3.1) einer in einen Untergrund einbringbaren Begrenzung (3), beispielsweise einer Weg- oder Rasenkantenbegrenzung (3) und/oder von einem im Abstand über einem Untergrund verlaufenden Führungselement, beispielsweise Führungsschiene oder Führungsseil (25) gebildet ist.

3. Trag- und/oder Führungsvorrichtung nach einem der vorhergehenden Ansprüche, **dadurch gekennzeichnet, dass** der Rahmen (21) Bestandteil eines Arbeitsgerätes (20) ist.

4. Trag- und/oder Führungsvorrichtung nach einem der vorhergehenden Ansprüche, **dadurch gekennzeichnet, dass** am Rahmen (5, 21) wenigstens ein Halter oder Lagerbock (14) zur vorzugsweise einstellbaren Befestigung eines Arbeitsgerätes (15) vorgesehen ist.

5. Trag- und/oder Führungsvorrichtung nach einem der vorhergehenden Ansprüche, **dadurch gekennzeichnet, dass** die Begrenzung (3) aus Metall, beispielsweise aus mehreren aneinander anschließenden Platten (4) aus Metall besteht.

6. Trag- und/oder Führungsvorrichtung nach einem der vorhergehenden Ansprüche, **dadurch gekennzeichnet, dass** die Führung von wenigstens zwei drehbar gelagerten Führungsrollen (11) gebildet ist.

7. Trag- und/oder Führungsvorrichtung nach einem der vorhergehenden Ansprüche, **dadurch gekennzeichnet, dass** der Rahmen (5, 21) ein vertikales oder im Wesentlichen vertikales Rahmenelement (7, 7a) aufweist, an dem der Halter- oder Lagerbock für das Arbeitsgerät (15) vorgesehen ist.

8. Trag- und/oder Führungsvorrichtung nach einem der vorhergehenden Ansprüche, **dadurch gekennzeichnet, dass** der Rahmen (5) ein einen seitlichen Ausleger bildendes Rahmenelement (6) aufweist.

9. Trag- und/oder Führungsvorrichtung nach einem der vorhergehenden Ansprüche, **dadurch gekennzeichnet, dass** der Halter bzw. Lagerbock ein am Rahmen (5, 21) verschiebbarer, vorzugsweise gewichtsentlastet verschiebbarer Schlitten (14) ist.

10. Trag- und/oder Führungsvorrichtung nach einem der vorhergehenden Ansprüche, **dadurch gekennzeichnet, dass** das Arbeitsgerät (15) schwenkbar bzw. einstellbar am Rahmen (5, 21) oder am Schlitten (14) vorgesehen ist.

11. Trag- und/oder Führungsvorrichtung nach einem der vorhergehenden Ansprüche, **dadurch gekennzeichnet, dass** das Arbeitsgerät eine Heckenschere (15) oder ein Rasenmäher ist ist.

12. Trag- und/oder Führungsvorrichtung nach einem der vorhergehenden Ansprüche, **gekennzeichnet durch** wenigstens ein Sicherungselement (22, 23) zum Sichern des Führungseingriffs der Führungselemente (11) an dem Führungsabschnitt (3.1, 26).

13. System zur Bearbeitung von Pflanzen, insbesondere zum Zuschneiden von Pflanzen,
**gekennzeichnet durch**
eine Trag- und/oder Führungsvorrichtung nach einem der vorhergehenden Ansprüche, mit einem verfahrbaren Rahmen (5, 21) mit wenigstens einem Werkzeug (15, 20), beispielsweise mit wenigstens einem motorisch angetiebenen Werkzeug, sowie
**durch** am Rahmen (5, 21) vorgesehene Führungselemente (11, 24), die mit wenigstens einem geländeseitigen Führungsabschnitt (3.1, 25) zusammenwirken.

14. System nach Anspruch 15, **dadurch gekennzeichnet, dass** der wenigstens eine Führungsabschnitt von einem Abschnitt (3.1) einer in einen Untergrund einbringbaren Begrenzung (3), beispielsweise einer Weg- oder Rasenkantenbegrenzung (3) und/oder von einem im Abstand über einem Untergrund verlaufenden Führungselement, beispielsweise Führungsschiene oder Führungsseil (25) gebildet ist.

15. System nach einem der vorhergehenden Ansprüche, **dadurch gekennzeichnet, dass** der Rahmen (21) Bestandteil eines Arbeitsgerätes (20) und/oder dass am Rahmen (5, 21) wenigstens ein Halter oder Lagerbock (14) zur vorzugsweise einstellbaren Befestigung eines Arbeitsgerätes (15) vorgesehen ist.
